# EUROPÄISCHE PATENTSCHRIFT

(11) **EP 3 022 008 B1**
(45) Veröffentlichungstag und Bekanntmachung des Hinweises auf die Patenterteilung: **01.11.2017**
(21) Anmeldenummer: 14772303.5
(22) Anmeldetag: 17.09.2014
(51) Int. Cl.: B22F 3/105, B23K 26/02, B23K 26/144, B23K 26/0622, B23K 26/342, B33Y 10/00, B33Y 30/00, B23K 26/06, B29C 67/00

(54) **VERFAHREN ZUR HERSTELLUNG EINES BAUTEILS SOWIE OPTISCHE BESTRAHLUNGSVORRICHTUNG**
METHOD FOR MANUFACTURING A COMPONENT AND OPTICAL IRRADIATION DEVICE
PROCÉDÉ DE FABRICATION D'UNE COMPOSANT ET DISPOSITIF DE RAYONNEMENT OPTIQUE

(30) Priorität: 29.10.2013 EP 13190691
(43) Veröffentlichungstag der Anmeldung: 25.05.2016
(73) Patentinhaber: Siemens Aktiengesellschaft, 80333 München (DE)
(72) Erfinder: BURBAUM, Bernd, 14612 Falkensee (DE); MALOW, Thomas, 14129 Berlin (DE); PIEGERT, Sebastian, 03222 Lübbenau (DE)
(86) Internationale Anmeldenummer: PCT/EP2014/069820
(87) Internationale Veröffentlichungsnummer: WO 2015/062784

(56) Entgegenhaltungen:
- WO-A1-2006/040280
- DE-A1-102007 029 052
- DE-A1-102011 089 336
- US-A1- 2013 142 965

## Beschreibung

Die Erfindung betrifft ein Verfahren zur Herstellung eines Bauteils durch aufeinanderfolgendes Verfestigen einzelner Schichten aus pulverförmigem, körnigem oder flüssigem Material durch Bestrahlung mit Laserstrahlung mit Hilfe eines Lasers, wobei jede Schicht in einen Innenbereich und einen Randbereich mit einer Randbereichsoberfläche zerlegt wird, sowie eine optische Bestrahlungsvorrichtung.

Ein Verfahren zum Herstellen eines Bauteils durch Strahlung von Pulverschichten mit Hilfe eines Lasers wird im Dokument DE-A-10 2011 086 889 offenbart. Generative Fertigungsverfahren werden durch ihr iteratives Auf- oder Aneinanderfügen von Schicht- oder Volumenelementen zur Herstellung dreidimensionaler Gegenstände eingesetzt, und finden ihre Anwendung im Bereich der Herstellung von Prototypen sowie inzwischen auch in der Bauteilherstellung, insbesondere bei der Anfertigung individuell geformter Bauteile. Als Ausgangsmaterialien steht eine Vielzahl unterschiedlicher Werkstoffe zur Verfügung, die sowohl in Pulver- oder Granulatform, aber auch in Form von Fluiden bspw. als Suspensionen, vorliegen können. Bei generativen Herstellungsverfahren, wird der dreidimensionale Gegenstand durch eine Vielzahl einzelner Materialschichten, die auf einer absenkbaren Bauteilplattform nacheinander abgeschieden und anschließend einzeln einem lokal selektiven Verfestigungsprozess unterzogen werden, gebildet.

Zur Darstellung eines Bauteiles mittels Selektivem Laser(strahl)schmelzen (SLM) wird ein Pulverbett mittels eines Laserstrahles gemäß einem vorgegebenen Belichtungsfile belichtet, bei dem die Daten aus einem 3D-CAD-File erzeugt werden. Im Berechnungsschritt wird das Bauteil in einzelne Schichten unterteilt. Im zweiten Berechnungsschritt werden für jede Schicht die Bahnen (Vektoren) erzeugt, die der Laserstrahl abfährt.

Ist eine Pulverschicht belichtet, so wird die Bauteilplattform abgesenkt und eine neue Schicht Pulver mittels eines Schiebers, beispielsweise eines Rechens aufgebracht und dann erneut mit dem Laser und mithilfe des Belichtungsfiles belichtet. Dies wird solange fortgeführt, bis ein Bauteil vollständig generiert ist. Speziell mit dem selektiven Laserstrahlschmelzen ist es möglich, Bauteile mit komplexen Hohlstrukturen generativ aufzubauen.

Die Oberflächenrauheit wird bei diesem Prozess durch die Verfahrensparameter (Laserleistung, Strahldurchmesser, Verfahrgeschwindigkeit) sowie der Kornfraktion des eingesetzten Pulverwerkstoffes bestimmt (normal 20µm - 40µm). Zudem weist das Intensitätsprofil eines Laserstrahls eine Intensitätsverteilung auf, die durch ein glockenförmiges Profil (Gaussche Verteilung) beschrieben werden kann. Dies bedeutet, dass das Intensitätsmaximum im Zentrum des Laserstrahls liegt und die Intensität zu den Rändern des Laserstrahls hin abnimmt. Hierdurch wird beim Aufschmelzen des Pulverbettes ein Temperaturmaximum in der Mitte des Laserstrahls auf der Oberfläche des Pulverbettes erreicht, wobei die Temperatur zum Rand hin abnimmt und am Rande nicht zum Aufschmelzen der Partikel ausreicht. Hierdurch werden insbesondere am Rande des herzustellenden Bauteilquerschnittes an der Oberfläche des Pulverbettes Probleme erzeugt. Der Laserstrahl muss nämlich am Rande des Querschnitts so lange verweilen, bis die Randpartikel des herzustellenden Bauteils aufgeschmolzen wurden. In der Nähe des Randes, nämlich dort, wo sich das Intensitätsmaximum des Laserstrahls befindet, ist zu diesem Zeitpunkt aber bereits ein zu hohes Maß an Energie zugeführt worden. Daher ist der Prozess, insbesondere am Rande des Querschnitts schwer zu beherrschen. Daher ergeben sich relativ große gemittelte Rauhtiefewerte R_{z} (Mittelwert aus den gemessenen Rauhtiefen) bzw. Mittenrauwerte Rₐ (Arithmetisches Mittel der Abweichungen von der Mittellinie). Innen liegende Oberflächen können somit nach dem selektiven Laserstrahlschmelzprozess schlecht oder gar nicht nachgearbeitet werden.

Eine erste Aufgabe der Erfindung ist daher die Angabe eines Verfahrens zur Herstellung eines schichtweise aufgebauten Bauteils, insbesondere eines hochtemperaturbelasteten Bauteils, welches das oben genannte Problem vermeidet. Eine zweite Aufgabe ist die Angabe einer verbesserten optischen Bestrahlungsvorrichtung zur Herstellung eines Bauteils, welches sich insbesondere zur Durchführung des obigen Verfahrens eignet.

Erfindungsgemäß wird die erste Aufgabe mit der Angabe eines Verfahrens zur Herstellung eines Bauteils durch aufeinanderfolgendes Verfestigen einzelner Schichten aus pulverförmigem, körnigem oder flüssigem Material durch Bestrahlung mit Laserstrahlung mit Hilfe eines Lasers gelöst, wobei jede Schicht in einen Innenbereich und einen Randbereich mit einer Randbereichsoberfläche zerlegt wird, und wobei bei jeder Schicht nach dem Bestrahlen durch den Laser zumindest die Randbereichsoberfläche des Randbereichs der jeweiligen Schicht mit einem Ultrakurzpulslaser bestrahlt wird.

Mit einem Ultrakurzpulslaser (Ultrakurzpuls-Laserstrahlquelle) werden erfindungsgemäß nach jeder Schweißlage die Oberflächen in den Randbereichen strukturiert bzw. umgeschmolzen. Aufgrund der kurzen Pulsdauern von Ultrakurzpulslasern wird nur das unmittelbar durch den Laserstrahl getroffene Material beeinflusst. Dadurch wird zumindest die Oberfläche des Randbereichs gezielt und vollständig aufgeschmolzen, wodurch sich im Vergleich zum Stand der Technik eine definierte Oberflächenstruktur in diesem Randbereich ergibt. Dadurch wird die Nacharbeit der Bauteiloberfläche vermieden. Auch ist sind die Rauhtiefewerte R_{z} bzw. Mittenrauwerte Rₐ verbessert, d.h. niedriger, so dass sich von vornherein eine verbesserte Oberflächengüte im Randbereich einstellt. Dabei können unter dem Begriff Randbereich selbstverständlich auch Randbereiche an Aussparungen in der Mitte des Bauteils verstanden werden.

In bevorzugter Ausgestaltung wird der ganze Randbereich der jeweiligen Schicht bestrahlt. Dies lässt sich beispielsweise über die Leistung des Ultrakurzpulslasers erzielen. Dadurch wird eine definierte Oberflächenstruktur, insbesondere im Randbereich sichergestellt.

Bevorzugt sendet der Ultrakurzpulslaser gepulstes Laserlicht mit Pulsdauern im Bereich von Pikosekunden und Femtosekunden aus. Dieses eignet sich besonders gut zur Materialbearbeitung.

Der Ultrakurzpulslaser bestrahlt bevorzugt die Randbereichsoberfläche unter einem Winkel von 30°-45° zu dieser Randbereichsoberfläche. Die Materialbearbeitung erfolgt daher aus einem Winkel von 30°-45° zur Oberfläche, wodurch die Zulänglichkeit verbessert wird. Dadurch können bei Bedarf auch strukturierte Oberflächen, wie z.B. golfballartige Oberflächen, haifischhautartige Oberflächen, auf innen liegende Flächen generiert werden. Durch die Erfindung können daher vorteilhafterweise die innen liegenden Flächen mit definierter, strömungsoptimierter Oberflächenstruktur gefertigt werden.

Bevorzugt werden der Ultrakurzpulslaser als auch die zu verfestigenden einzelnen Schichten in einer Prozesskammer angeordnet. Der Ultrakurzpulslaser wird um 360° verfahrbar in dieser Prozesskammer angeordnet. Dadurch wird sichergestellt, dass auch in den Aussparungen die Randbereiche bzw. die Randbereichsoberfläche sicher durch den Ultrakurzpulslaserstrahl erfassbar sind.

Erfindungsgemäß wird die zweite Aufgabe mit der Angabe einer optischen Bestrahlungsvorrichtung zur Herstellung eines Bauteils durch aufeinanderfolgendes Verfestigen einzelner Schichten aus pulverförmigen, körnigen oder flüssigen Material, gelöst, umfassend:
- die zu verfestigenden, einzelnen Schichten, wobei jede Schicht in einen Innenbereich und einen Randbereich mit einer Randbereichsoberfläche zerlegbar ist,
- einen Laser zur Bestrahlung der einzelnen Schichten, wodurch die jeweilige bestrahlte Schicht verfestigbar ist,
- einen Ultrakurzpulslaser, welcher nach dem Bestrahlen der jeweiligen Schicht durch den Laser zumindest die Randbereichsoberfläche der jeweiligen Schicht bestrahlt.

In bevorzugter Ausgestaltung sind der Ultrakurzpulslaser als auch die zu verfestigenden einzelnen Schichten in einer Prozesskammer angeordnet. Der Ultrakurzpulslaser ist in bevorzugter Ausgestaltung um 360° verfahrbar in dieser Prozesskammer angeordnet, wodurch auch alle Randbereichsoberflächen gut mit dem Strahl des Ultrakurzpulslasers erreichbar sind. Dies gilt insbesondere in Bezug auf Aussparungen. Bevorzugt ist der Ultrakurzpulslaser mit einem Winkel von 30°-45° zu der Randbereichsoberfläche angeordnet.

Die Vorteile des Verfahrens können auch auf die optischen Bestrahlungsvorrichtung übertragen werden: Mit einem Ultrakurzpulslaser werden nach jeder Schweißlage die Oberflächen in den Randbereichen strukturiert bzw. umgeschmolzen. Dazu wird der Ultrakurzpulslaser um 360° verfahrbar in die Prozesskammer integriert. Die Materialbearbeitung erfolgt aus einem Winkel von 30°-45° zur Oberfläche. Dadurch können bei Bedarf auch strukturierte Oberflächen (Golfball, Haifischhaut) auf innen liegende Flächen generiert werden.

Bevorzugt eignet sich die optische Bestrahlungsvorrichtung zur Durchführung des oben beschriebenen Verfahrens.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: schematisch die erfindungsgemäße Vorrichtung
- FIG 2: schematisch das Verfahren.

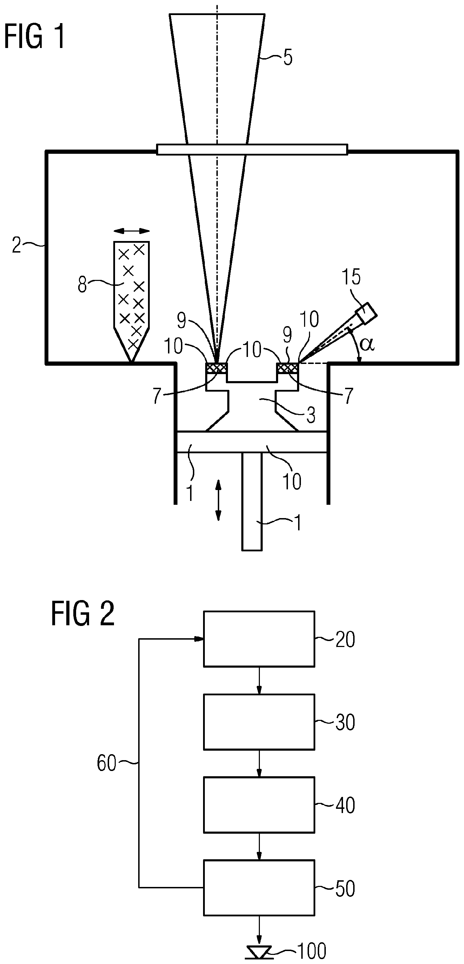

FIG 1 zeigt schematisch die erfindungsgemäße Vorrichtung zum schichtweisen Generieren von Bauteilen. Dabei weist die erfindungsgemäße optische Bestrahlungsvorrichtung eine Bauteilplattform 1 auf. Diese kann in einer Prozesskammer 2 angeordnet sein. Die Bauteilplattform 1 kann verschiebbar bzw. absenkbar sein. Durch eine Pulverauftragsvorrichtung 8 wird nun eine Pulverschicht 7 auf die Bauteilplattform 1 aufgetragen. Selbstverständlich können auch andere Materialschichten z.B. aus körnigem oder flüssigem Material aufgetragen und verfestigt werden. Dabei kann auf der Bauteilplattform 1 auch das halbfertige zu generierende Bauteil 3 angeordnet sein. In diesem Fall wird die Pulverschicht 7 zumindest auf das halbfertige Bauteil 3, welches auf der abgesenkten Bauteilplattform 1 angeordnet ist, aufgetragen. Zudem umfasst die Vorrichtung als Verfestiger einen Laser 5, welcher auch außerhalb der Prozesskammer 2 angeordnet sein kann. Der Laser 5 schmilzt nun lokal das Pulver auf, welches sich anschließend verfestigt und sich mit der darunter liegenden Schicht verbindet. Jede Schicht weist einen Innenbereich mit einer Innenbereichsoberfläche 9 und einen Randbereich mit einer Randbereichsoberfläche 10 auf. Erfindungsgemäß wird bei jeder Schicht nach dem Bestrahlen bzw. Verfestigen durch den Laser 5 zumindest die Randbereichsoberfläche 10 des Randbereichs der jeweils gerade bestrahlten Schicht mit einem Ultrakurzpulslaser 15 bestrahlt. Der Ultrakurzpulslaser 15 sendet gepulstes Laserlicht mit Pulsdauern im Bereich von Pikosekunden und Femtosekunden aus. Der Ultrakurzpulslaser 15 bestrahlt die Randbereichsoberfläche 10 des Randbereichsunter einem Winkel α = 30°-45° zu dieser Randbereichsoberfläche. Um alle Randbereichsoberflächen 10 zu erreichen, also insbesondere diejenigen, welche sich an Aussparungen im Bauteil 3 innen befinden, wird der Ultrakurzpulslaser 15 um 360° verfahrbar in dieser Prozesskammer 2 angeordnet.

FIG 2 zeigt schematisch das erfindungsgemäße Verfahren auf. Dabei wird zunächst eine Bauteilplattform 1 (FIG 1) für das zu generierende Bauteil 3 (FIG 1) bereitgestellt 20. Anschließend wird eine neue Pulverschicht 7 (FIG 1) auf die Bauteilplattform 1 (FIG 1) bzw. auf die vorangegangenen verfestigten und nicht verfestigten Pulverschichten aufgetragen (Pulverbett) 30. Dabei kann die Pulverschicht 7 (FIG 1) durch eine Pulverauftragsvorrichtung 8 (FIG 1) aufgetragen werden. Die aufgetragene Pulverschicht 7 (FIG 1) wird lokal anhand eines Belichtungsfiles 40 mit einem Laser 5 (FIG 1) bestrahlt bzw. verfestigt. Anschließend wird die bestrahlte Schicht in den Randbereichsoberflächen 10 mit einem Ultrakurzpulslaser 15 (FIG 1) bestrahlt. Dadurch wird die Randbereichsoberfläche 10 umgeschmolzen oder kann sogar strukturiert werden 50. Das Verfahren endet, wenn das Bauteil 3 schichtweise vollständig aufgebaut ist 100. Ansonsten startet das Verfahren erneut 60.

Dadurch wird zumindest die Randbereichsoberfläche 10 gezielt und vollständig aufgeschmolzen. Dadurch sind die Rauhtiefewerte R_{z} bzw. Mittenrauwerte Rₐ verbessert, d.h. niedriger, so dass sich von vornherein eine verbesserte d.h. definierte Oberflächenstruktur im Randbereich einstellt. Dadurch wird die Nacharbeit der Bauteiloberfläche vermieden. Durch die Erfindung können daher auch die innen liegenden Flächen mit definierter, strömungsoptimierter Oberflächenstruktur gefertigt werden. Auch können bei Bedarf strukturierte Oberflächen (Golfball, Haifischhaut) auf innen liegende Flächen generiert werden.

## Patentansprüche

1. Verfahren zur Herstellung eines Bauteils (3) durch aufeinanderfolgendes Verfestigen einzelner Schichten aus pulverförmigem, körnigem oder flüssigem Material durch Bestrahlung mit Laserstrahlung mit Hilfe eines Lasers (5), wobei jede Schicht in einen Innenbereich und einen Randbereich mit einer Randbereichsoberfläche (10) zerlegt wird,
**dadurch gekenzeichet, dass** bei jeder Schicht nach dem Bestrahlen durch den Laser (5) zumindest die Randbereichsoberfläche (10) des Randbereich der jeweiligen Schicht mit einem Ultrakurzpulslaser (15) bestrahlt wird.

2. Verfahren zur Herstellung nach Anspruch 1,
**dadurch gekennzeichnet, dass** der ganze Randbereich der jeweiligen Schicht bestrahlt wird.

3. Verfahren zur Herstellung nach Anspruch 1 oder 2, **dadurch gekennzeichet, dass** der Ultrakurzpulslaser (15) gepulstes Laserlicht mit Pulsdauern im Bereich von Pikosekunden und Femtosekunden aussendet.

4. Verfahren zur Herstellung nach einem der Ansprüche 1 bis 3,
**dadurch gekenzeichet**, **dass** der Ultrakurzpulslaser mit einem Winkel (α) von 30°-45° zu der Randbereichsoberfläche (10) angeordnet wird.

5. Verfahren zur Herstellung nach einem der vorhergehenden Ansprüche,
**dadurch gekenzeichet**, **dass** der Ultrakurzpulslaser (15) als auch die zu verfestigenden einzelnen Schichten in einer Prozesskammer (2) angeordnet werden und der Ultrakurzpulslaser (15) um 360° verfahrbar in dieser Prozesskammer (2) angeordnet wird.

6. Optische Bestrahlungsvorrichtung zur Herstellung eines Bauteils (3) durch aufeinanderfolgendes Verfestigen einzelner Schichten aus pulverförmigem, körnigem oder flüssigem Material, umfassend:
- die zu verfestigenden, einzelnen Schichten, wobei jede Schicht in einen Innenbereich und einen Randbereich mit einer Randbereichsoberfläche (10) zerlegbar ist,
- einen Laser (5) zur Bestrahlung der einzelnen Schichten, wodurch die jeweilige bestrahlte Schicht verfestigbar ist,
- einen Ultrakurzpulslaser (15), welcher nach dem Bestrahlen der jeweiligen Schicht durch den Laser (5) zumindest die Randbereichsoberfläche (10) der jeweiligen Schicht bestrahlt.

7. Optische Bestrahlungsvorrichtung zur Herstellung eines Bauteils nach Anspruch 6,
**dadurch gekennzeichnet, dass**
der Ultrakurzpulslaser (15) als auch die zu verfestigenden einzelnen Schichten in einer Prozesskammer (2) angeordnet sind.

8. Optische Bestrahlungsvorrichtung zur Herstellung eines Bauteils nach Anspruch 7,
**dadurch gekennzeichnet, dass**
der Ultrakurzpulslaser (15) um 360° verfahrbar in dieser Prozesskammer (2) angeordnet ist.

9. Optische Bestrahlungsvorrichtung nach einem der vorhergehenden Ansprüche 6-8,
**dadurch gekenzeichet**, **dass**
der Ultrakurzpulslaser (15) mit einem Winkel (α) von 30°-45° zu der Randbereichsoberfläche (10) angeordnet ist.

## Claims

1. Production method for a component (3) by successive solidification of individual layers of powdered, granular or liquid material by irradiation with laser radiation with the aid of a laser (5), each layer being divided into an inner region and an edge region with an edge region surface (10), **characterized in that**
for each layer, at least the edge region surface (10) of the edge region of the respective layer is irradiated with an ultrashort-pulse laser (15) after the irradiation by the laser (5).

2. Production method according to Claim 1,
**characterized in that**
the entire edge region of the respective layer is irradiated.

3. Production method according to Claim 1 or 2, **characterized in that**
the ultrashort-pulse laser (15) emits pulsed laser light with pulse durations in the range of picoseconds and femtoseconds.

4. Production method according to one of Claims 1 to 3, **characterized in that**
the ultrashort-pulse laser is arranged at an angle (α) of 30°-45° with respect to the edge region surface (10).

5. Production method according to one of the preceding claims,
**characterized in that**
the ultrashort-pulse laser (15) as well as the individual layers to be solidified are arranged in a process chamber (2), and the ultrashort-pulse laser (15) is arranged movably through 360° in this process chamber (2).

6. Optical irradiation device for producing a component (3) by successive solidification of individual layers of powdered, granular or liquid material, comprising:
- the individual layers to be solidified, each layer being dividable into an inner region and an edge region with an edge region surface (10),
- a laser (5) for irradiating the individual layers, so that the respective irradiated layer can be solidified,
- an ultrashort-pulse laser (15), which irradiates at least the edge region surface (10) of the respective layer after the irradiation of the respective layer by the laser (5).

7. Optical irradiation device for producing a component according to Claim 6,
**characterized in that**
the ultrashort-pulse laser (15) as well as the individual layers to be solidified are arranged in a process chamber (2).

8. Optical irradiation device for producing a component according to Claim 7,
**characterized in that**
the ultrashort-pulse laser (15) is arranged movably through 360° in this process chamber (2).

9. Optical irradiation device according to one of the preceding Claims 6-8,
**characterized in that**
the ultrashort-pulse laser (15) is arranged at an angle (α) of 30°-45° with respect to the edge region surface (10).

## Revendications

1. Procédé de fabrication d'un composant (3) par consolidation successive de couches individuelles en matière pulvérulente, granuleuse ou liquide, par soumission à un rayonnement laser à l'aide d'un laser (5), chaque couche étant décomposée en une région intérieure et en une région de bord ayant une surface (10) de région de bord,
**caractérisé en ce que**
pour chaque couche, après soumission au laser (5), on soumet au moins la surface (10) de la région de bord de cette couche à un laser (15) à impulsions ultracourtes.

2. Procédé de fabrication suivant la revendication 1, **caractérisé en ce que**
l'on soumet au rayonnement toute la région de bord de la couche.

3. Procédé de fabrication suivant la revendication 1 ou 2, **caractérisé en ce que**
le laser (15) à impulsions ultracourtes émet de la lumière laser pulsée ayant des durées d'impulsion dans la plage des picosecondes et des femtosecondes.

4. Procédé de fabrication suivant l'une des revendications 1 à 3,
**caractérisé en ce que**
le laser à impulsions ultracourtes fait un angle (α) de 30° à 45° avec la surface (10) de la région de bord.

5. Procédé de fabrication suivant l'une des revendications précédentes,
**caractérisé en ce que**
l'on met le laser (15) à impulsions ultracourtes ainsi que les couches individuelles à consolider dans une chambre (2) de processus et on déplace de 360° le laser (15) à impulsions ultracourtes dans cette chambre (2) de processus.

6. Dispositif optique d'exposition à un rayonnement pour fabriquer un composant (3) par consolidation successive de couches individuelles, de matière pulvérulente, granuleuse ou liquide, comprenant :
- les couches individuelles à consolider, chaque couche pouvant être décomposée en une région intérieure et en un région de bord, ayant une surface (10) de région de bord,
- un laser (5) pour soumettre les couches individuelles à un rayonnement, par lequel la couche soumise au rayonnement peut être consolidée,
- un laser (15) à impulsions ultracourtes, qui, après que la couche a été soumise à un rayonnement par le laser (5), soumet au moins la surface (10) de région de bord de la couche à un rayonnement.

7. Dispositif optique de rayonnement pour la fabrication d'un composant suivant la revendication 6,
**caractérisé en ce que**
le laser (15) à impulsions ultracourtes, tout comme les diverses couches à consolider, sont disposés dans une chambre (2) de processus.

8. Dispositif optique de rayonnement pour la fabrication d'un composant suivant la revendication 7,
**caractérisé en ce que**
le laser (15) à impulsions ultracourtes peut être déplacé de 360° dans cette chambre (2) de processus.

9. Dispositif optique de rayonnement pour la fabrication d'un composant suivant l'une des revendications précédentes 6 à 8, **caractérisé en ce que**
le laser (15) à impulsions ultracourtes fait un angle (α) de 30° à 45° avec la surface (10) de la région de bord.
